# EUROPEAN PATENT APPLICATION

(11) **EP 0 635 663 A1**
(43) Date of publication of application: **25.01.1995**
(21) Application number: 94304706.8
(22) Date of filing: 28.06.1994
(51) Int. Cl.: F16J 15/16, F15B 15/14

(54) **Air cylinder with anti-blowby piston**

(30) Priority: 28.06.1993 US 83343
(71) Applicant: American Cylinder Co., Inc., Peotone, Illinois 60468 (US)
(72) Inventor: Lutkus, Richard A., Peotone, Illinois 60468 (US)
(74) Representative: Chettle, Adrian John

(57) **Abstract**

The present invention provides a unique design for a piston in an air cylinder which eliminates or minimizes the occurrence of blowby. The present invention provides a piston with a beveled surface leading into the seal cavities on the open side of the seals. By providing this beveled surface: (1) air in the cylinder can get into the cavity and beneath the lip of the "U" cup seal to flair the seal against the cylinder wall thus achieving a positive seal; and (2) the "suction-cup" like tendency of the seal lips to adhere to the cavity walls in the event of temporary lip collapse is prevented.

## Description

### Technical Field

The present invention relates to air cylinders and more specifically to a new design for the pistons in such air cylinders which eliminates air blowby.

### Background Art

Air cylinders are activated by compressed air with driving pressure and back pressure. In double acting cylinders, ports act as input and exhaust openings for air. The pistons in such a double acting cylinders commonly have two cavities for seals to prevent air leaking across the piston. Such an air leak, an undesirable occurrence, is commonly known as "blowby" to those of skill in the art. The seals commonly used on these pistons are of a "U" cup design. The "U" cup seal provides low breakaway, that is, a minimal air pressure is required to activate the cylinder.

A blowby condition generally occurs when the lips of the seal fail to allow a sufficient amount of air to flair the seal against the cylinder wall, or some other factor inhibits sufficient seal lip contact with the cylinder wall. The seal must contact the cylinder wall sufficiently to achieve a positive seal. This blowby condition is compounded in pneumatic systems incorporating small components due to a low and sometimes insufficient air flow.

A blowby condition can also commonly occur when an air cylinder sits in a fixed position for a significant period of time. In some applications, air is continued to be drawn out of the cylinder creating a low pressure or vacuum which collapses the seal lips against the piston. Upon air pressure reversal for cylinder stroking the seals remain collapsed and a blowby condition results.

### Disclosure Of Invention

The present invention provides a unique design for a piston in an air cylinder which eliminates or minimizes the occurrence of blowby. While the known pistons in the art provide two seal cavities for "U" cup seals having straight walls defining the cavities, the present invention provides a beveled surface leading into the cavities on the open side of the seals. By providing this beveled surface: (1) air in the cylinder can get into the cavity and beneath the lip of the "U" cup seal to flair the seal against the cylinder wall thus achieving a positive seal; and (2) the "suction-cup" like tendency of the seal lips to adhere to the cavity walls in the event of temporary lip collapse is prevented.

### Brief Description Of Drawings

FIG. 1 is a schematic, partial cross-sectional view of a typical prior art double acting air cylinder.

FIG. 2 is a schematic cross-sectional view of a typical prior art piston.

FIG. 3 is a schematic, close-up, cross-sectional view of a typical prior art piston cavity with a flared "U" cup seal.

FIG. 4 is a schematic, close-up, cross-sectional view of a typical prior art piston cavity with a collapsed "U" cup seal.

FIG. 5 is a schematic cross-sectional view of a piston in accordance with the present invention.

FIG. 6 is a schematic, close-up cross-sectional view of the piston cavity with a collapsed "U" cup seal in a piston in accordance with the present invention.

FIG. 7 is a schematic, close-up cross-sectional view of the piston cavity with a flared "U" cup seal in a piston in accordance with the present invention.

FIG. 8 is a schematic, partial cross-sectional view of a double acting air cylinder in accordance with the present invention.

### Modes For Carrying Out The Invention

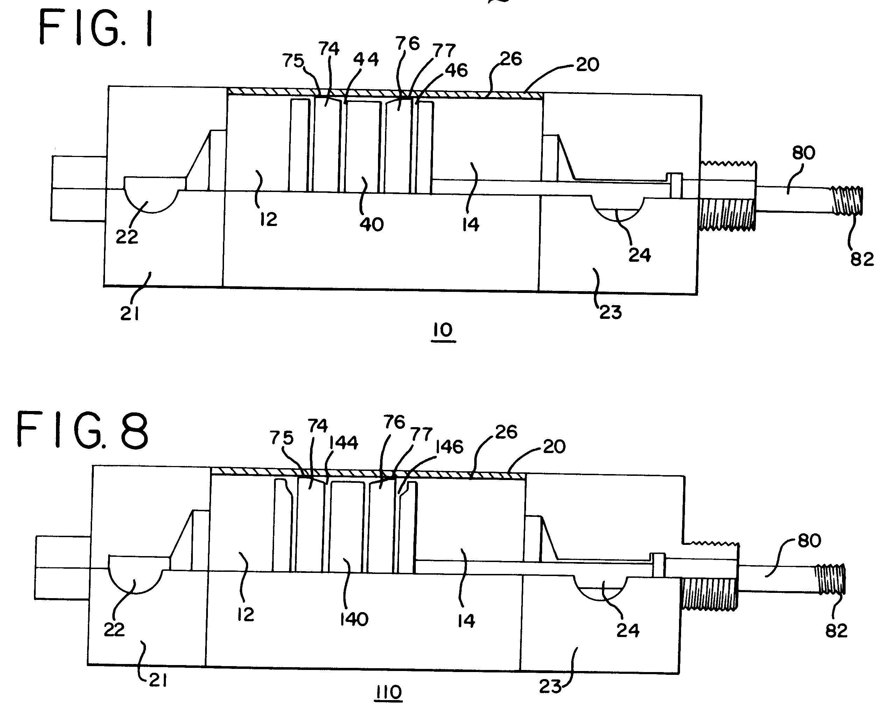

Referring first to FIG. 1, there is seen a double acting air cylinder. The cylinder 10 is comprised of a cylinder body 20, cylinder heads 21, 23, a piston 40 and connecting rod 80. The cylinder heads 21, 23 are each formed with a port 22, 24 which act as input and exhaust openings for air. The piston 40 divides the cylinder 10 into two chambers 12 and 14. Each chamber is connected to one of the ports 22 and 24. The piston 40 depicted in FIG. 1 is of a conventional design. The piston assembly generally comprises piston 40 with cavities 44 and 46 and seals 74 and 76. Seals 74 and 76 are traditional "U" cup seals and are installed respectively in the cavities 44 and 46. These seals, when working properly, have lips 75, 77 which flare against the cylinder body wall 26 thus achieving a positive seal so that the air chamber 12 connected to port 22 is in a pressure isolated situation from the air chamber 14 connected to port 24. Connecting rod 80 is connected to piston 40 and has a distal end 82 which passes outside of cylinder head 23. The distal end 82 of rod 80 is connected in turn to the appropriate machinery.

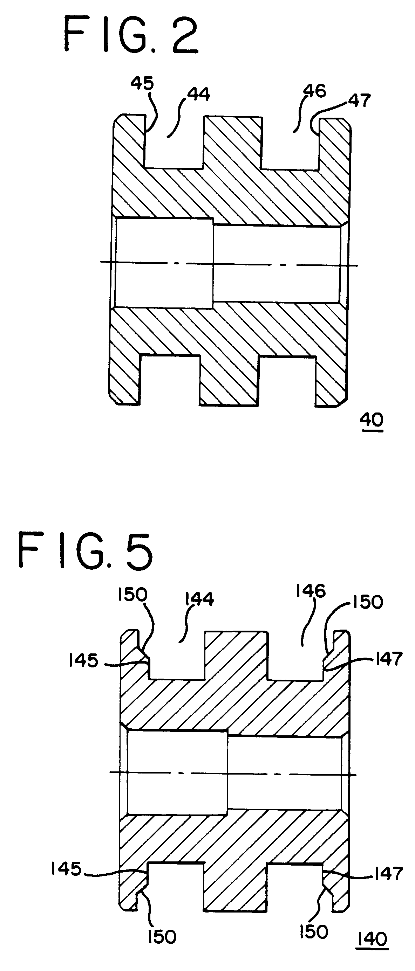

Turning now to FIG. 2, a prior art piston 40 is seen in more detail. As seen in FIG. 2, a prior art piston comprises two seal cavities 44, 46 for receiving seals 74, 76 (not shown). The walls 45, 47 of the cavities 44, 46 are straight.

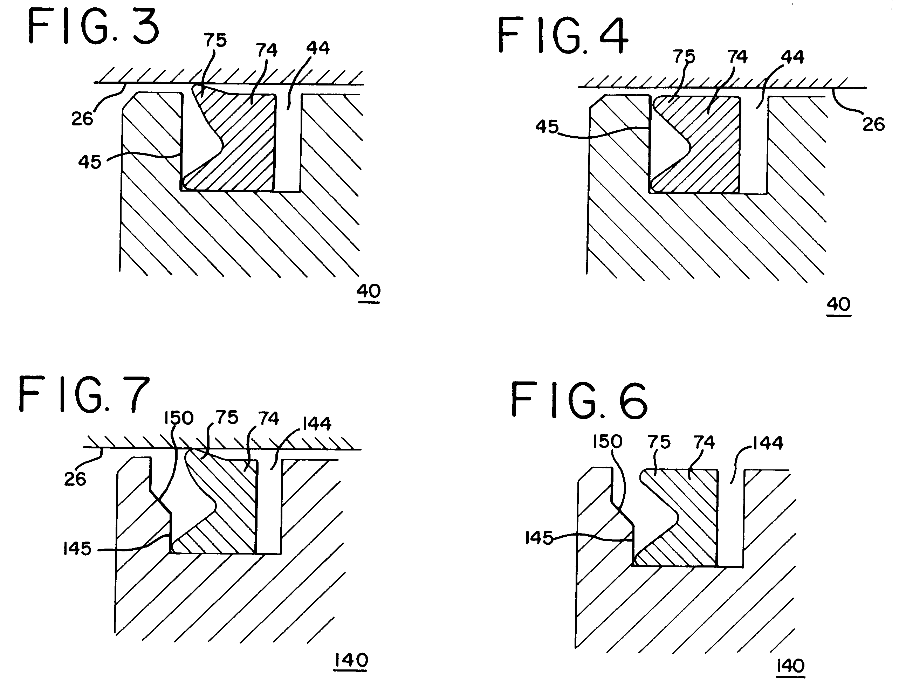

Turning now to FIGs. 3 and 4 the details of one seal cavity 44 with associated seal 74 are seen. FIG. 3 shows the seal 74 in its intended, "flaired" condition with lip 75 firmly seated against the cylinder body wall 26. The seal 74 depicted is a traditional "U" cup seal with an open side and a closed side. The lip 75 flares against the cylinder body wall 26 and is maintained there by the air pressure in the cylinder which can enter the seal 74 past the wall 45 of cavity 44.

As seen in FIG. 4, the blowby problem occurs upon a collapse of the lip 75 of the seal 74. The seal 74 is not flared at all and thus is not achieving positive sealing against the cylinder body wall 26. Rather, the seal 74 has collapsed completely with lip 75 touching wall 45 of the cavity 44. Thus, air can blowby the non-sealed space between the piston 40 and the cylinder body wall 26. It is not possible for the air entering the cylinder to flare the seal 74 against the cylinder body wall 26, because the lip 75 of the seal 74 tends to adhere to the side wall 45 of the cavity 44. Given this, there is no possibility of air entering the seal 74 to flare the lip 75.

In contrast, a piston 140 of the present invention is shown in FIG. 5. (The element numbers for non-piston elements such as the seal and cylinder are the same as those above.) The piston 140 comprises seal cavities 144 and 146. Unlike the prior art, the seal cavities 144 and 146 have a beveled surface 150. The beveled surface 150 is present on the sidewalls 145, 147 of the cavities 144, 146 which is intended to be the open side of the seals 74, 76, (not shown) when the seals are installed. Turning to FIG. 6, it can be seen that even though the seal 74 is collapsed to the same degree as the seal in FIG. 4, the use of the beveled surface 150 on the sidewall 145 of the seal cavity 144 allows an area for air to enter below the upper lip 75 of the "U" cup seal 74. Because of the beveled surface 150, the seal 74 can still be flared by the air entering the cylinder and will not adhere to sidewall 145. Thus, while the seal 74 depicted in FIG. 4 will not flare and a blowby condition will result, the seal 74 in FIG. 6 flares. This is depicted in FIG. 7. The beveled surface 150 allows air to enter seal 74, and to flare the upper lip 75 of the "U" cup seal 74 achieving a positive sealing against the cylinder body wall 26 and preventing a blowby condition. An air cylinder embodying this unique piston 140 is depicted in FIG. 8 and comprises the same general parts as the prior art air cylinder except that prior art piston 40 has been replaced by piston 140 of the present invention.

Thus, it is the unique design of the piston which eliminates or at least minimizes a blowby condition in an air cylinder.

## Claims

1. An air cylinder comprising:
a cylinder body having an inner body wall sealing surface and having a cylinder head conected to each end of said cylinder body;
a piston in said cylinder, said piston comprising a piston body having a seal cavity with a beveled surface on the sidewall of said cavity;
a seal having a lip in said seal cavity;
a connecting rod connected to said piston, the distal end of said rod extending beyond said cylinder head and outside of said cylinder body.

2. The air cylinder of claim 1 wherein said seal is a U-cup seal.

3. A double acting air cylinder comprising:
a cylinder body having an inner body wall sealing surface and having a cylinder head at each end of said body, said wall and said heads defining a pressurizable volume;
a piston dividing said cylinder into two chambers, said piston comprising a piston body having two seal cavities defined by sidewalls and a cavity bottom;
a seal having a lip located in each of said cavities;
an input-exhaust port in each cylinder head for transmission of air to one of said chambers;
a connecting rod connected to said piston and extending beyond one of said cylinder heads and outside of said cylinder body; and
means for admitting air into each of said cavities below said lips of said seals to flair said lips of said seals against said sealing surface thus isolating said chambers from each other so that air may not enter from one of said chambers to the other of said chambers.

4. The double acting air cylinder of claim 3 wherein said admitting means is a beveled surface on the sidewall of said piston seal cavity.

5. The double acting air cylinder of claim 3 wherein said seal is a U-cup seal.

6. A piston comprising a piston body having a seal cavity for receiving a seal, said cavity having a beveled surface on the sidewall of said cavity.

7. An air cylinder comprising:
a cylinder body having an inner body wall sealing surface and having a cylinder head connected to each end of said cylinder body;
a piston according to claim 6 in said cylinder; and
a seal having a lip in said seal cavity.

8. An air cylinder according to claim 7 and further comprising a connecting rod connected to said piston, the distal end of said rod extending beyond said cylinder head and outside of said cylinder body.

9. An air cylinder according to claim 7 or claim 8 wherein said seal is a U-cup seal.

10. An air cylinder according to any of claims 7-9 wherein said piston divides said cylinder into two chambers to define a double acting air cylinder, said piston comprising a piston body having two seal cavities defined by sidewalls and a cavity bottom, and having a respective seal having a lip located in each of said cavities;
and said cylinder further comprising an input-exhaust port in each cylinder head for transmission of air to one of said chambers; and
means for admitting air into each of said cavities below said lips of said seals to flare said lips of said seals against said sealing surface thus isolating said chambers from each other so that air may not enter from one of said chambers to the other of said chambers.
